# EUROPÄISCHE PATENTSCHRIFT

(11) **EP 3 597 472 B1**
(45) Veröffentlichungstag und Bekanntmachung des Hinweises auf die Patenterteilung: **22.10.2025**
(21) Anmeldenummer: 19184931.4
(22) Anmeldetag: 08.07.2019
(51) Int. Cl.: B60L 53/10, B60L 53/14, B60L 53/30, B60L 55/00, B60L 53/50

(54) **BATTERIELADEEINRICHTUNG FÜR FLURFÖRDERZEUGE**
BATTERY CHARGER FOR LIFTING VEHICLES
CHARGEUR DE BATTERIE POUR DE VÉHICULES

(30) Priorität: 16.07.2018 DE 102018117157
(43) Veröffentlichungstag der Anmeldung: 22.01.2020
(73) Patentinhaber: STILL GmbH, 22113 Hamburg (DE)
(72) Erfinder: Ziel, Ronald, 21526 Hohenhorn (DE)
(74) Vertreter: Patentship Patentanwaltgesellschaft

(56) Entgegenhaltungen:
- EP-A1- 2 538 518
- EP-A2- 2 707 936
- EP-B1- 2 707 936
- DE-A1- 102014 012 479
- DE-T5- 112013 007 450
- GB-A- 2 525 068
- US-A1- 2012 313 568
- US-A1- 2016 121 735
- US-A1- 2016 176 305

## Beschreibung

Die Erfindung betrifft eine Batterieladeeinrichtung eines intralogistischen Systems, bei dem logistische Material- und Warenflüsse innerhalb eines Betriebsgeländes abgewickelt werden, wobei die Batterieladeeinrichtung eingerichtet ist, mindestens eine schnellladefähige Traktionsbatterie mindestens eines Flurförderzeugs zu laden, wobei die Batterieladeeinrichtung über einen Stromnetzanschluss an ein Stromversorgungsnetz anschließbar ist und mindestens ein Hochleistungsladegerät aufweist, an das die Traktionsbatterie des Flurförderzeugs zum Laden anschließbar ist.

Aus der EP 2 538 518 A1 ist eine Schnellladevorrichtung bekannt, mit der eine Batterie in einem Elektro-Fahrzeug geladen werden kann. Die Schnellladevorrichtung weist eine Batterie hoher Kapazität (large-capacity battery), eine erste Schnelladebatterie (first battery for quick charging) und eine zweite Schnellladebatterie (second battery for quick charging) auf. Zum Laden der Fahrzeug-Batterie mit Strom aus den drei Batterien der Schnellladevorrichtung verfügt die Schnellladevorrichtung über einen DC/DC-Wandler, einen Puffer-Widerstand (buffering resistor) und einen direkten Ladeweg, wobei mit einem Schalter zwischen diesen drei Ladewegen umgeschaltet werden kann.

Die EP 2 707 936 A0 offenbart einen als Anhänger oder als Anbauvorrichtung ausgebildeten mobilen Energiespeicher, der mehrere Batterien aufweist und die Batterie eines Elektro-Fahrzeugs bei hoher Spannung laden kann Gemäß der Figur 10 weist der mobile Energiespeicher die Batterien und einen Inverter auf, der DC-Power der Batterien in eine AC-Power an einem AC-Ausgang umwandelt, und eine variable energy control device auf, die eingangsseitig an einen AC-Eingang und einen DC-Eingang angeschlossen ist und ausgangsseitig an einen DC-Ausgang angeschlossen ist und mit den Batterien verbunden ist.

Aus der US 2012/0313568 A1 ist eine solar-betrieben elektrische Ladesäule für Elektro-Fahrzeuge oder Hybrid-Fahrzeuge bekannt.

Die US 2016/121735 A1 offenbart ein Schnelllade-Stromversorgungssystem für Fahrzeuge.

Unter einem intralogistischen System versteht man ein System, bei dem logistische Material- und Warenflüsse innerhalb eines Betriebsgeländes abgewickelt werden. Intralogistische Systeme umfassen insbesondere Geräte zur Lager- und Fördertechnik, Hebezeuge, Flurförderzeuge, Kommissioniergeräte, Palettiergeräte, Verpackungsgeräte sowie lagerhallenspezifische Einrichtungen, wie z.B. automatische Tore, und übergeordnete Datenverarbeitungseinrichtungen, wie z.B. Warenmanagementsysteme oder Lagerverwaltungssysteme. All diese Geräte und Einrichtungen bilden die technischen Prozessteilnehmer des intralogistischen Systems.

In solchen intralogistischen Systemen werden vermehrt auch batterieelektrisch angetriebene Flurförderzeuge mit integrierten und somit fest und nicht auswechselbar eingebauten, schnellladefähigen Traktionsbatterien, insbesondere Lithium-Ionen-Batterien, eingesetzt. Um eine hohe Verfügbarkeit der Flurförderzeuge im intralogistischen System zu gewährleisten, sollen diese Traktionsbatterien der Flurförderzeuge sehr schnell geladen werden. Hierzu wird eine sehr hohe Ladeleistung benötigt. Ein Batteriewechsel soll oder kann in diesen Flurförderzeugen nicht durchgeführt werden, da insbesondere im Falle von Lithium-Ionen-Batterien als Traktionsbatterien besonders hohe Sicherheitsanforderungen aufgrund des Risikos enormer Energiefreisetzungen bei solchen Batterien gelten.

Eine hohe Ladeleistung steht aber häufig einer geringen Anschlussleistung der lokalen elektrischen Infrastruktur des Logistikbetreibers gegenüber. Um eine Überlastung des lokalen Stromnetzes zu vermeiden, muss also für eine hohe Ladeleistung der schnelladefähigen Traktionsbatterien die lokale elektrische Infrastruktur mit hohem Investitionsaufwand ausgebaut werden. Außerdem können Stromlastspitzen hohe Stromkosten für den Betreiber verursachen.

Der vorliegenden Erfindung liegt die Aufgabe zugrunde, eine Batterieladeeinrichtung der eingangs genannten Art so auszugestalten, dass eine Überlastung des lokalen Stromnetzes und teure Stromlastspitzen für den Logistikbetreiber vermieden werden können.

Diese Aufgabe wird erfindungsgemäß dadurch gelöst, dass die Batterieladeeinrichtung mindestens einen Pufferspeicher für elektrische Energie umfasst, der zwischen dem mindestens einen Hochleistungsladegerät und dem Stromnetzanschluss zwischengeschaltet ist, und dass die den mindestens einen Pufferspeicher und das mindestens eine Hochleistungsladegerät umfassende Batterieladeeinrichtung auf einer versetzbaren Plattform montiert ist.

Um eine Überlastung des lokalen Stromnetzes und kostspielige Stromlastspitzen für den Logistikbetreiber zu vermeiden, wird erfindungsgemäß zwischen dem Hochleistungsladegerät und dem Stromnetzanschluss ein Pufferspeicher für elektrische Energie installiert. Bei der erfindungsgemäßen Batterieladeeinrichtung ist somit ein Pufferspeicher für elektrische Energie, der einen Stromnetzanschluss aufweist und an Stromnetz angeschlossen ist, mit mindestens einem Hochleistungsladegrät kombiniert. Der Pufferspeicher ist eingangsseitig mittels des Stromnetzanschluss an ein Stromnetz angeschlossen. Ausgangsseitig steht der Pufferspeicher mit dem mindestens einen Hochleistungsladegerät in elektrischer Verbindung. Dabei können für die Energiepufferung von Stromversorgungsnetzknoten oder Inselnetzen bereits verfügbare Pufferspeicher verwendet werden.

Als Hochleistungsladegerät kann ein herkömmliches Ladegerät mit hoher Ladeleistung verwendet werden, das zum Laden von schnellladefähigen Traktionsbatterien, insbesondere Lithium-Ionen-Batterien, geeignet ist. Das Hochleistungsladegerät ist vorzugsweise so ausgelegt, dass beispielsweise eine Gabelstaplerbatterie in Lithium-Ionen-Bauart mit einer Batteriekapazität von 750 Ah innerhalb von 30 Minuten auf 50% der Ladekapazität geladen werden kann.

Bevorzugt hat der Pufferspeicher einen Stromnetzanschluss mit geringer Leistungsaufnahme, so dass eine gleichmäßige Auslastung des lokalen Stromnetzes gewährleistet ist. Auf diese Weise kann mit geringer Leistung günstig elektrische Energie aufgenommen und gespeichert werden und bei Bedarf mit hoher Leistung zum Laden der mindestens einen Traktionsbatterie abgegeben werden.

Der Pufferspeicher ist zweckmäßigerweise als Lithium-Ionen-Batterie ausgebildet.

Bevorzugt weist der Pufferspeicher einen nominellen Energieinhalt von ca. 80 bis ca. 200 kWh, insbesondere ca. 100 bis ca. 150 kWh, auf.

Besitzt der Logistikbetreiber eine lokale Energieerzeugung (Solarenergie, Blockkraftwerk etc.), so kann diese Energie ebenfalls in den elektrischen Pufferspeicher eingespeist und verwendet werden. Hierzu ist der Pufferspeicher vorteilhafterweise so eingerichtet, dass er an eine lokale Stromerzeugung, insbesondere eine Solarstromerzeugung oder ein Blockkraftwerk, anschließbar ist.

Eine weitere Ausgestaltung sieht vor, dass der Pufferspeicher als bidirektionaler Pufferspeicher ausgebildet ist, der Energie in das Stromversorgungsnetz einspeisen kann. Auf diese Weise können beispielsweise lokale Netzschwankungen (Peakshaving, Frequenzstützen) kompensiert werden.

Außerdem können bei Verwendung eines Standard-Ladesteckers zum Laden der Traktionsbatterie und/oder bei Installation eines zusätzlichen Standard-Ladesteckers zusätzlich auch die Batterien von batterieelektrisch angetriebenen Personenkraftwagen und/oder Lastkraftwagen mit derselben Batterieladeeinrichtung geladen werden.

Gemäß der Erfindung ist die Batterieladeeinrichtung auf einer versetzbaren Plattform montiert, um einen flexiblen Einsatz im Logistikumfeld des Logistikbetreibers zu gewährleisten. Hierzu kann die Batterieladeeinrichtung beispielsweise in Containerbauweise mit einem oder mehreren Containerelementen ausgebildet sein, die den Pufferspeicher und die Hochleistungsladegeräte enthalten. Die Containerelemente können z.B. auf einem Stahlfundament aufgestellt sein.

Vorzugsweise verfügt die Plattform über eine Kollisionsschutzeinrichtung für die Batterieladeeinrichtung. Dies ist insbesondere bei einer Ausbildung des Pufferspeichers als Lithium-Ionen-Batterie wichtig, da beispielsweise bei einer Kollision eines Flurförderzeugs mit dem als Lithium-Ionen-Batterie ausgebildeten Pufferspeicher enorme Energien freigesetzt werden können, so dass erhöhte Brandgefahr besteht.

Dabei kann die Kollisionsschutzeinrichtung z.B. vertikale Stahlträger an den Ecken der Plattform umfassen, die den Pufferspeicher vor einem Auffahren und/oder Anfahren schützen.

Zweckmäßigerweise verfügt die Plattform über eine Aufhängevorrichtung, die ein Anheben und Versetzen der Plattform mittels einer Kranvorrichtung ermöglicht. Hierzu können beispielsweise Ösen an den vertikalen Stahlträgern vorgesehen sein, an denen Kranseile angebracht werden können. Auf diese Weise kann die Plattform mittels eines Krans oder einer sonstigen, geeigneten Hebevorrichtung angehoben und an einen anderen Aufstellort innerhalb des Logistikbereichs transportiert werden. Somit wird ein flexibler Einsatz im Logistikumfeld des Logistikbetreibers gewährleistet.

Die Erfindung bietet eine ganze Reihe von Vorteilen:
Der Logistikbetreiber kann durch die Erfindung ein oder mehrere Hochleistungsladegeräte zum Laden von schnelladefähigen Traktionsbatterien von Flurförderzeugen Einsatz bringen, ohne seine Netzinfrastruktur erweitern zu müssen und teure Lastspitzen beim Energieversorger zu erzeugen. Durch den versetzbaren und somit mobilen Aufbau kann die Batterieladeeinrichtung individuell in den Logistikprozess beim Logistikbetreiber integriert werden. Besitzt der Logistikbetreiber eine lokale Energieerzeugung (Solarenergie, Blockkraftwerk etc.), so kann diese Energie ebenfalls in den elektrischen Pufferspeicher eingespeist und verwendet werden.

Weitere Vorteile und Einzelheiten der Erfindung werden anhand der in den schematischen Figuren dargestellten Ausführungsbeispiele näher erläutert. Hierbei zeigen
- Figur 1: im oberen Teil eine Prinzipskizze einer Batterieladeeinrichtung sowie im unteren Teil eine perspektivische Darstellung einer Batterieladeeinrichtung mit Flurförderzeug, und
- Figur 2: eine perspektivische Darstellung einer Plattform mit erfindungsgemäßer Batterieladeeinrichtung.

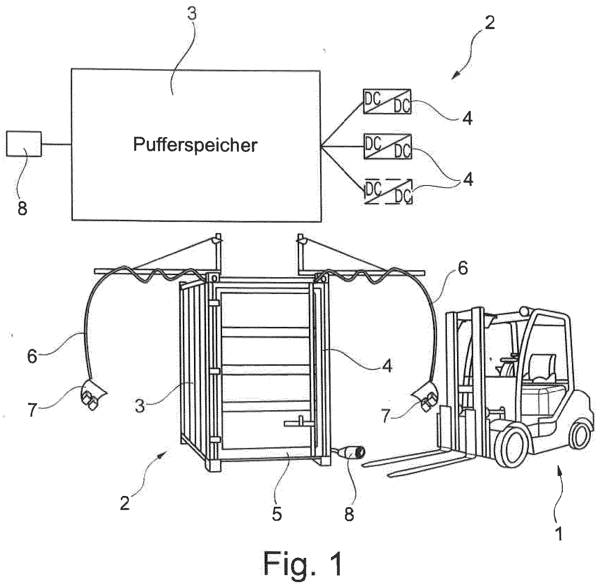

Im unteren Teil der Figur 1 ist ein Flurförderzeug 1 gezeigt, das im vorliegenden Ausführungsbeispiel ein Flurförderzeug 1 mit batterieelektrischem Antrieb ist. Im Flurförderzeug 1 ist eine in der Figur 1 nicht näher dargestellte, als Lithium-Ionen-Batterie ausgebildete schnelladefähige Traktionsbatterie verbaut, die aus Sicherheitsgründen zum Laden nicht aus dem Flurförderzeug 1 entnommen wird, sondern im Flurförderzeug 1 verbleibt. Die als Lithium-Ionen-Batterie ausgebildete Traktionsbatterie ist vorteilhaft in das Flurförderzeug 1 integriert und somit fest und nicht auswechselbar in das Flurförderzeug 1 eingebaut.

Zum Laden der Traktionsbatterie wird das Flurförderzeug 1 an eine Batterieladeeinrichtung 2 herangefahren. Die Batterieladeeinrichtung 2 umfasst einen Pufferspeicher 3 und mindestens ein Hochleistungsladegerät 4, die in einem gemeinsamen Container 5 untergebracht sind. Über mindestens ein Ladekabel 6 mit Ladestecker 7 kann die Traktionsbatterie des Flurförderzeugs 1 geladen werden.

Zum Laden der Traktionsbatterie mit einer Speicherkapazität von 750 Ah auf 50% der Ladekapazität benötigt das mindestens eine Hochleistungsladegerät 4 lediglich 30 Minuten.

Als Pufferspeicher 3 dient eine Lithium-Ionen-Batterie mit einem Energieinhalt von beispielsweise 120 kWh.

Der Pufferspeicher 3 ist über eine lokale Netzinfrastruktur an ein öffentliches Stromversorgungsnetz angeschlossen. Hierzu verfügt der Pufferspeicher 3 über einen Stromnetzanschluss 8 mit geringer Leistungsaufnahme, so dass eine gleichmäßige Auslastung des Stromnetzes gewährleistet ist. Das mindestens eine Hochleistungsladegerät 4 ist eingangsseitig an den Pufferspeicher 3 angeschlossen. Auf diese Weise kann mit geringer Leistung günstig elektrische Energie aus dem Stromnetz aufgenommen und im Pufferspeicher 3 gespeichert werden und bei Bedarf von dem Hochleistungsladegerät 4 mit hoher Leistung zum Laden der schnelladefähigen Traktionsbatterie des Flurförderzeugs 1 abgegeben werden.

Im oberen Teil der Figur 1 ist eine Prinzipskizze der Batterieladeeinrichtung 2 gezeigt. Dabei wird verdeutlicht, dass der Pufferspeicher 3 zwischen dem Stromnetzanschluss 8 und dem mindestens einen Hochleistungsladegerät 4 zwischengeschaltet ist und elektrisch zwischen dem Stromnetzanschluss 8 und dem mindestens einen Hochleistungsladegerät 4 angeordnet ist.

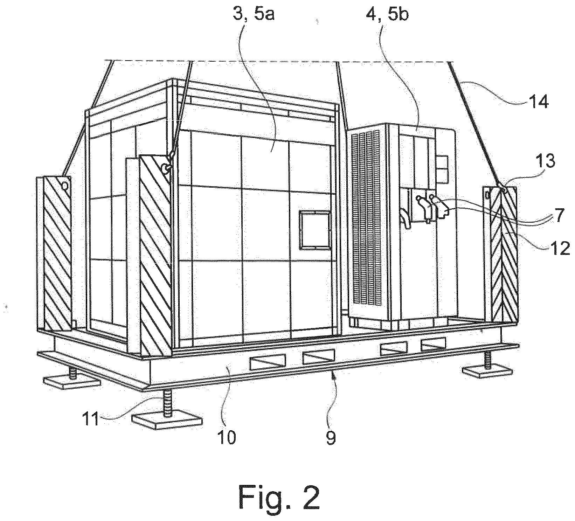

Die Figur 2 zeigt eine perspektivische Darstellung einer Plattform 9 mit erfindungsgemäßer Batterieladeeinrichtung 2. In der Figur 2 sind der Pufferspeicher 3 und das mindestens eine Hochleistungsladegerät 4 in separaten Containern 5a und 5b untergebracht, die auf der Plattform 9 stehen.

Die Plattform 9 umfasst ein Stahlfundament 10, das auf Standfüßen 11 auf dem Boden steht. An den Ecken des Stahlfundaments 10 sind als vertikale Stahlträger 12 ausgebildete Kollisionsschutzeinrichtungen 12 befestigt, die den Pufferspeicher 3 gegen Kollisionen beispielsweise von Flurförderzeugen schützen. Im oberen Bereich der Stahlträger 12 befinden sich als Ösen 13 ausgebildete Aufhängevorrichtungen 13, an denen Kranseile 14 anbringbar sind. Mittels der Kranseile 14 kann die Plattform 9 beispielsweise mit einem Kran angehoben und zu einem anderen Aufstellort z.B. innerhalb einer Lagerhalle transportiert werden.

## Patentansprüche

1. Batterieladeeinrichtung (2) eines intralogistischen Systems, bei dem logistische Material- und Warenflüsse innerhalb eines Betriebsgeländes abgewickelt werden, wobei die Batterieladeeinrichtung (2) eingerichtet ist, mindestens eine schnellladefähige Traktionsbatterie mindestens eines Flurförderzeugs (1) zu laden, wobei die Batterieladeeinrichtung (2) über einen Stromnetzanschluss (8) an ein Stromversorgungsnetz anschließbar ist und mindestens ein Hochleistungsladegerät (4) aufweist, an das die Traktionsbatterie des Flurförderzeugs (1) zum Laden anschließbar ist, **dadurch gekennzeichnet, dass** die Batterieladeeinrichtung (2) mindestens einen Pufferspeicher (3) für elektrische Energie umfasst, der zwischen dem mindestens einen Hochleistungsladegerät (4) und dem Stromnetzanschluss (8) zwischengeschaltet ist, und dass die den mindestens einen Pufferspeicher (3) und das mindestens eine Hochleistungsladegerät (4) umfassende Batterieladeeinrichtung (2) auf einer versetzbaren Plattform (9) montiert ist.

2. Batterieladeeinrichtung nach Anspruch 1, **dadurch gekennzeichnet, dass** der Pufferspeicher (3) als Lithium-Ionen-Batterie ausgebildet ist.

3. Batterieladeeinrichtung nach Anspruch 1 oder 2, **dadurch gekennzeichnet, dass** der Pufferspeicher (3) einen nominellen Energieinhalt von ca. 80 bis ca. 200 kWh, insbesondere ca. 100 bis ca. 150 kWh, aufweist.

4. Batterieladeeinrichtung nach einem der Ansprüche 1 bis 3, **dadurch gekennzeichnet, dass** der Pufferspeicher (3) an eine lokale Stromerzeugung, insbesondere eine Solarstromerzeugung oder ein Blockkraftwerk, anschließbar ist.

5. Batterieladeeinrichtung nach einem der Ansprüche 1 bis 4, **dadurch gekennzeichnet, dass** der Pufferspeicher (3) als bidirektionaler Pufferspeicher (3) ausgebildet ist, der Energie in das Stromversorgungsnetz einspeisen kann.

6. Batterieladeeinrichtung nach einem der Ansprüche 1 bis 5, **dadurch gekennzeichnet, dass** die Plattform (9) über eine Kollisionsschutzeinrichtung (12) für die Batterieladeeinrichtung (2) verfügt.

7. Batterieladeeinrichtung nach einem der Ansprüche 1 bis 6, **dadurch gekennzeichnet, dass** die Plattform (9) über eine Aufhängevorrichtung (13) verfügt, die ein Anheben und Versetzen der Plattform (9) mittels einer Kranvorrichtung ermöglicht.

## Claims

1. Battery charging device (2) of an intralogistics system, in which logistical material flows and goods flows are handled on company premises, wherein the battery charging device (2) is designed to charge at least one fast-charging traction battery of at least one industrial truck (1), wherein the battery charging device (2) can be connected to a power supply grid via a power grid connection (8) and has at least one high-performance charger (4) to which the traction battery of the industrial truck (1) can be connected for charging, **characterized in that** the battery charging device (2) comprises at least one buffer store (3) for electrical energy, which buffer store is connected between the at least one high-performance charger (4) and the power grid connection (8), and **in that** battery charging device (2) comprising the at least one buffer store (3) and the at least one high-performance charger (4) is mounted on a movable platform (9).

2. Battery charging device according to Claim 1, **characterized in that** the buffer store (3) is in the form of a lithium-ion battery.

3. Battery charging device according to Claim 1 or 2, **characterized in that** the buffer store (3) has a nominal energy content of approximately 80 to approximately 200 kWh, in particular approximately 100 to approximately 150 kWh.

4. Battery charging device according to any one of Claims 1 to 3, **characterized in that** the buffer store (3) can be connected to a local power generation system, in particular a solar power generation system or a block-type power plant.

5. Battery charging device according to any one of Claims 1 to 4, **characterized in that** the buffer store (3) is in the form of a bidirectional buffer store (3), which can feed energy into the power supply grid.

6. Battery charging device according to any one of Claims 1 to 5, **characterized in that** the platform (9) has a collision protection device (12) for the battery charging device (2).

7. Battery charging device according to any one of Claims 1 to 6, **characterized in that** the platform (9) has a suspension apparatus (13), which enables the platform (9) to be lifted and moved by means of a crane apparatus.

## Revendications

1. Chargeur (2) de batterie d'un système intralogistique, qui traite des flux de matériaux et de marchandises logistiques au sein de locaux commerciaux, le chargeur (2) de batterie étant mis au point pour charger au moins une batterie de traction à charge rapide d'au moins un engin de manutention (1), le chargeur (2) de batterie pouvant être raccordé à un réseau d'alimentation électrique par une borne (8) du réseau électrique et comportant au moins un appareil de charge à puissance élevée (4), auquel la batterie de traction de l'engin de manutention (1) peut être raccordée pour la charge, **caractérisé en ce que** le chargeur (2) de batterie comprend au moins un accumulateur tampon (3) d'énergie électrique, qui est intercalé entre l'au moins un appareil de charge à puissance élevée (4) et la borne (8) du réseau électrique, et que le chargeur (2) de batterie comprenant l'au moins un accumulateur tampon (3) et l'au moins un appareil de charge à puissance élevée (4) est monté sur une plateforme (9) mobile.

2. Chargeur de batterie selon la revendication 1, **caractérisé en ce que** l'accumulateur tampon (3) est réalisé comme une batterie lithium-ions.

3. Chargeur de batterie selon la revendication 1 ou 2, **caractérisé en ce que** l'accumulateur tampon (3) présente une capacité d'énergie nominale d'environ 80 à environ 200 kWh, en particulier d'environ 100 à environ 150 kWh.

4. Chargeur de batterie selon l'une des revendications 1 à 3, **caractérisé en ce que** l'accumulateur tampon (3) peut être raccordé à une production d'énergie locale, en particulier à une production d'énergie solaire ou à une centrale électrique combinée.

5. Chargeur de batterie selon l'une des revendications 1 à 4, **caractérisé en ce que** l'accumulateur tampon (3) est réalisé comme un accumulateur tampon (3) bidirectionnel, qui peut injecter de l'énergie dans le réseau d'alimentation électrique.

6. Chargeur de batterie selon l'une des revendications 1 à 5, **caractérisé en ce que** la plateforme (9) dispose d'un dispositif de protection anticollision (12) pour le chargeur (2) de batterie.

7. Chargeur de batterie selon l'une des revendications 1 à 6, **caractérisé en ce que** la plateforme (9) dispose d'un dispositif de suspension (13), qui permet de soulever et de déplacer la plateforme (9) au moyen d'un dispositif de grue.
